# EUROPEAN PATENT APPLICATION

(11) **EP 4 075 365 A1**
(43) Date of publication of application: **19.10.2022**
(21) Application number: 22177852.5
(22) Date of filing: 31.08.2017
(51) Int. Cl.: G06Q 20/40, G06Q 20/36, G06Q 20/32, G06Q 20/34

(54) **EXPRESS CREDENTIAL TRANSACTION SYSTEM**

(30) Priority: 06.09.2016 US 201662384162 P
(62) Divisional of application: 17765036.3
(71) Applicant: Apple Inc., Cupertino CA 95014 (US)
(72) Inventor: ABDULRAHIMAN, Najeeb M., Cupertino, 95014 (US); LERCH, Matthias, Cupertino, 95014 (US); DICKER, George R., Cupertino, 95014 (US); ELRAD, Oren, Cupertino, 95014 (US); STEELE, Glen W., Cupertino, 95014 (US); AHN, Charles T., Cupertino, 95014 (US); TACKIN, Onur E., Cupertino, 95014 (US); SCOTT, Gordon Y., Cupertino, 95014 (US)
(74) Representative: Gillard, Matthew Paul

(57) **Abstract**

A device implementing an express credential transaction system includes at least one processor configured to receive an indication that a payment applet for a service provider has been provisioned on a secure element of the device with a first attribute indicating that the payment applet can be utilized for a transaction without authentication associated with the transaction. The processor is configured to set the first attribute of the payment applet to indicate that authentication is required to utilize the payment applet when another payment applet for the service provider provisioned on the secure element of the device has an attribute that indicates the other payment applet can be utilized for the transaction without user authentication. The at least one processor is configured to control whether the user authentication is requested when utilizing the payment applet or the other payment applet, respectively, in transactions.

## Description

### CROSS-REFERENCE TO RELATED APPLICATIONS

The present application claims the benefit of U.S. Provisional Patent Application Serial No. 62/384,162, entitled "Express Credential Transaction System," filed on September 6, 2016, which is hereby incorporated by reference in its entirety for all purposes.

### TECHNICAL FIELD

The present description relates generally to a contactless transaction system, including express transactions performed using a stored credential.

### BACKGROUND

In a mobile payment system, a payment applet that is provisioned on a secure element of an electronic device may correspond to a credential or card account, such as a credit card account. The payment applet may be used by the electronic device, after an authorized user authenticates with the mobile device (e.g., via fingerprint and/or password), to engage in a wireless payment transaction with, e.g., a wireless payment terminal. For example, after an authorized user authenticates with the electronic device, the electronic device may transmit, to the wireless payment terminal, a request for a wireless payment transaction using the card account corresponding to the payment applet. The wireless payment terminal may contact a service provider associated with the card account, such as a financial institution, to confirm that a payment can be made using the card account. For example, the service provider may confirm that sufficient funds and/or credit are available to complete the wireless payment transaction. If the service provider confirms that the wireless payment transaction can be completed, the wireless payment terminal completes the wireless payment transaction and transmits an indication of the same back to the electronic device.

### BRIEF DESCRIPTION OF THE DRAWINGS

Certain features of the subject technology are set forth in the appended claims. However, for purpose of explanation, several embodiments of the subject technology are set forth in the following figures.
FIG. 1 illustrates an example network environment in which an express credential transaction system may be implemented in accordance with one or more implementations.
FIG. 2 illustrates an example network environment including an example electronic device that may implement an express credential transaction system in accordance with one or more implementations.
FIG. 3 illustrates an example electronic device including an example secure element that may be used in an express credential transaction system in accordance with one or more implementations.
FIG. 4 illustrates a flow diagram of an example process for configuring a newly provisioned stored value payment applet in an express credential transaction system in accordance with one or more implementations.
FIG. 5 illustrates a flow diagram of an example process for using an express stored value payment applet in an express credential transaction system in accordance with one or more implementations.
FIG. 6 illustrates a flow diagram of an example process of designating an express stored value payment applet for a service provider in an express credential transaction system in accordance with one or more implementations.
FIG. 7 illustrates a flow diagram of an example process for locally securing an electronic device implementing an express credential transaction system in accordance with one or more implementations.
FIG. 8 illustrates a flow diagram of an example process for remotely securing an electronic device implementing an express credential transaction system in accordance with one or more implementations.
FIG. 9 illustrates an example electronic system with which aspects of the subject technology may be implemented in accordance with one or more implementations.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more implementations. In one or more implementations, structures and components are shown in block diagram form in order to avoid obscuring the concepts of the subject technology.

In a mobile payment system, in addition to the aforementioned payment applets that correspond to credit card accounts, one or more stored value payment applets that correspond to a stored value card (or "truth on card" or "actual cash value" (ACV) card), such as a transit card or other such prepaid card, may be provisioned on a secure element of an electronic device. A stored value card may differ from, e.g., a credit card, in that monetary value is stored with the card itself, rather than being stored in an external account, e.g., maintained by a financial institution. Thus, since a representation of a monetary value may be stored directly in (or with) the stored value payment applet, the electronic device may be able to engage in a wireless payment transaction with a wireless payment terminal using the stored value payment applet without needing confirmation or approval from the service provider associated with the stored value payment applet. For example, a stored value payment applet may be used to conduct a wireless payment transaction with a wireless transit payment terminal, irrespective of whether the wireless transit payment terminal (or device) can communicate with the transit provider to confirm the monetary value associated with the stored value payment applet.

Wireless transit payment terminals may be designed to perform high speed wireless payment transactions, e.g., express payment transactions, to allow a high volume of passengers to pass through the terminals and access the transit as quickly as possible. Even slight delays in processing wireless payment transactions can, for example, create a backup of passengers, cause passengers to miss trains, or prevent a mass transit vehicle, such as a bus, from departing until the boarding passengers have completed their wireless payment transactions. Thus, if a user of an electronic device is required to provide input, such as to authenticate (e.g., via fingerprint and/or password entry), prior to utilizing a stored value payment applet at a wireless transit payment terminal, as would be the case for payment applets corresponding to, e.g., credit cards, the latency associated with the, e.g., authentication may cause delays in processing wireless payment transactions by the wireless transit payment terminal. However, if the user of the electronic device was not required to authenticate to access any of the payment applets, the security of the mobile payment system may be compromised.

The subject system provides a solution to these and other issues by allowing a user to designate one or more of the stored value payment applets (e.g., per service provider) provisioned on the secure element of the electronic device as the express stored value payment applet. The express stored value payment applet can then be utilized in a wireless payment transaction with a wireless payment terminal, such as a wireless transit payment terminal, without requiring any manual input, e.g., authentication, from the user. In this manner, the user can place their electronic device in proximity of a wireless transit payment terminal and conduct a wireless payment transaction in the same manner as they would with a physical transit card, without incurring any of the latency associated with having to authenticate with (or provide other input to) the electronic device. Furthermore, the subject system maintains the security of the mobile payment system by still requiring the user to authenticate to utilize other stored value payment applets associated with the service provider that have not been designated as express, as well as to utilize any non-stored value payment applets, such as those corresponding to credit cards.

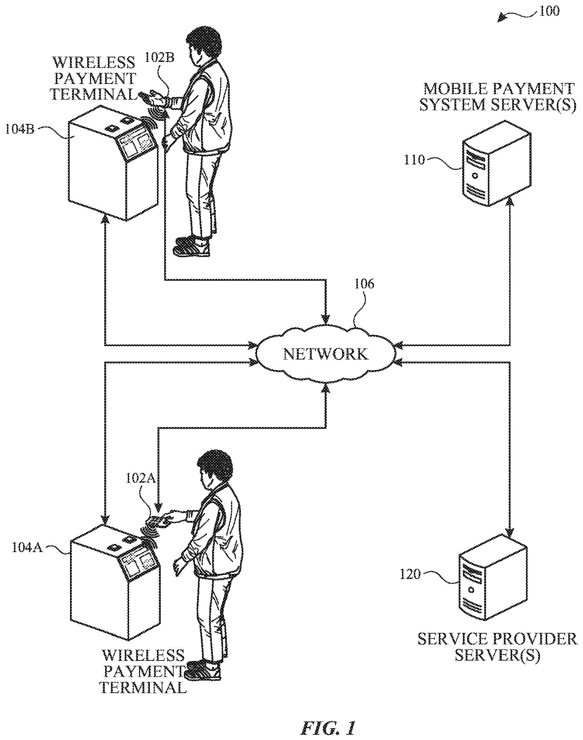

FIG. 1 illustrates an example network environment 100 in which an express credential transaction system may be implemented in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The network environment 100 includes one or more electronic devices 102A-B, one or more wireless payment terminals 104A-B, a network 106, one or more mobile payment system servers 110, and one or more service provider servers 120.

The network 106 may communicatively couple, for example, one or more of the wireless payment terminals 104A-B to the one or more service provider servers 120 and/or the one or more mobile payment system servers 110, one or more of the electronic devices 102A-B to the one or more mobile payment system servers 110 and/or the one or more service provider servers 120, and the one or more mobile payment system servers 110 to the one or more service provider servers 120. One or more of the electronic devices 102A-B may communicate with one or more of the wireless payment terminals 104A-B via a direct communication, such as a near field communication (NFC), that bypasses the network 106. In one or more implementations, one or more of the electronic devices 102A-B may communicate with one or more of the wireless payment terminals 104A-B over the network 106 and/or one or more of the wireless payment terminals 104A-B may not be communicatively coupled to the network 106. In one or more implementations, the network 106 may be an interconnected network of devices that may include, or may be communicatively coupled to, the Internet.

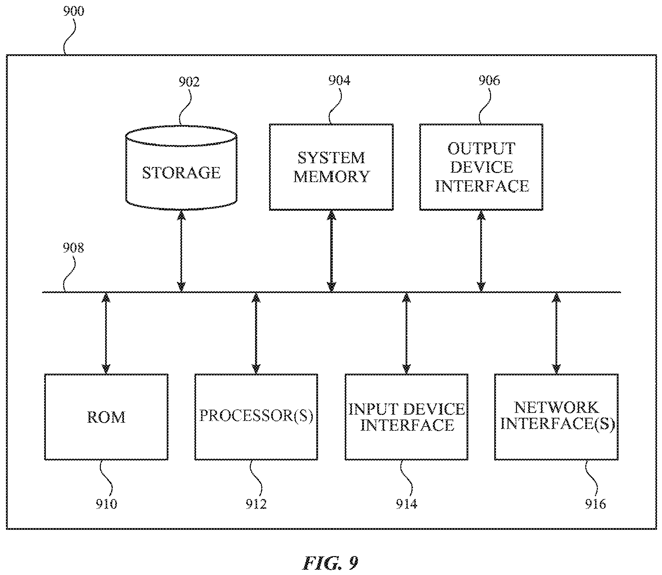

The wireless payment terminals 104A-B may be, for example, wireless transit payment terminals, wireless toll payment terminals, wireless parking meter payment terminals, wireless point of sale payment terminals, and/or any devices that include one or more wireless interfaces that may be used to perform a wireless transaction, such as NFC radios, wireless local area network (WLAN) radios, Bluetooth radios, Zigbee radios, cellular radios, and/or other wireless radios. In Fig. 1, by way of example, the wireless payment terminals 104A-B are depicted as wireless transit payment terminals. One or more of the wireless payment terminals 104A-B may be, and/or may include all or part of, the electronic system discussed below with respect to Fig. 9.

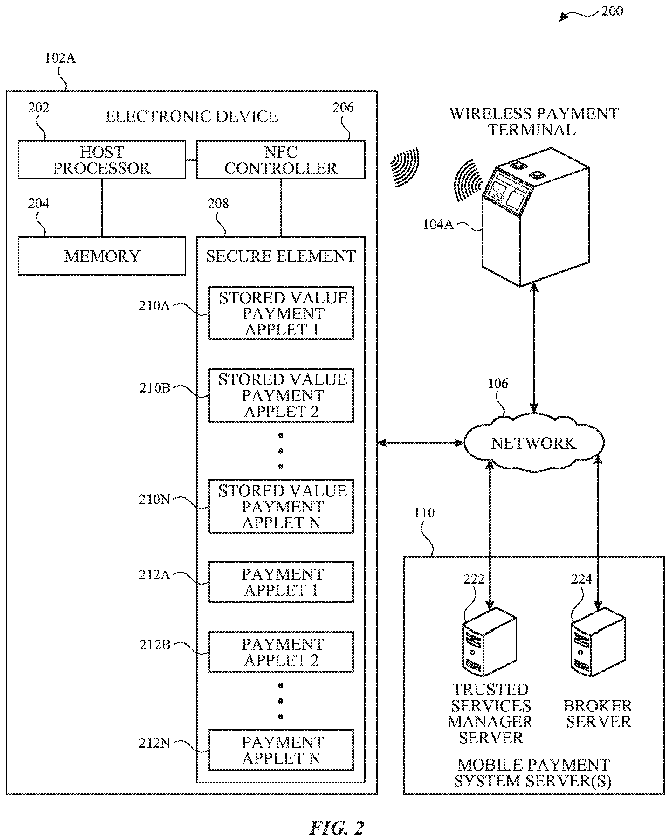

The one or more mobile payment system servers 110 may include one or more servers that facilitate providing a mobile payment system to one or more electronic devices 102A-B. As is discussed further below with respect to Fig. 2, the one or more mobile payment system servers 110 may include one or more trusted services manager (TSM) servers, one or more broker servers, one or more application servers, and/or generally any servers that may facilitate providing a mobile payment system. In one or more implementations, an authorized user of the electronic device 102A and/or the electronic device 102B may have a user account with the mobile payment system. The user account may be used to manage the various cards and/or credentials that the user has registered with the mobile payment system, e.g., via the one or more mobile payment system servers 110. The one or more mobile payment system servers 110 may be, and/or may include all or part of, the electronic system discussed below with respect to Fig. 9. For explanatory purposes, the one or more mobile payment system servers 110 are generally described herein with reference to a single mobile payment system. However, the one or more mobile payment system servers 110 may include servers corresponding to multiple different mobile payment systems.

The one or more service provider servers 120 may include one or more server devices that may facilitate a service being provided, such as a transit service, and/or that may facilitate utilizing wireless payment transactions for the service being provided. In one or more implementations, the one or more service provider servers 120 may include one or more servers corresponding to one or more financial institutions. The one or more service provider servers 120 may include one or more TSM servers, one or more broker servers, one or more application servers, or generally any servers that may facilitate providing a service and/or utilizing wireless payment transactions for the service. In one or more implementations, an authorized user of the electronic device 102A and/or the electronic device 102B may have a user account with one or more service providers associated with the one or more service provider servers 120. The user account may be used by the user to access the wireless payment transactions (e.g., a historical record) via the electronic device 102A and/or the electronic device 102B. The one or more service provider servers 120 may be, and/or may include all or part of, the electronic system discussed below with respect to Fig. 9. For explanatory purposes, the one or more service provider servers 120 are generally described herein with reference to a single transit system. However, the one or more service provider servers 120 may include servers corresponding to multiple different services, such as multiple different transit systems.

The electronic devices 102A-B may be, for example, portable computing devices such as laptop computers, smartphones, peripheral devices (e.g., digital cameras, headphones), tablet devices, wearable devices (e.g., watches, bands, etc.), or other appropriate devices that include one or more wireless interfaces, such as one or more NFC radios, WLAN radios, Bluetooth radios, Zigbee radios, cellular radios, and/or other wireless radios. In Fig. 1, by way of example, the electronic devices 102A and 102B are depicted as a mobile device and a smartwatch, respectively. One or more of the electronic devices 102A-B may be, and/or may include all or part of, the electronic device discussed below with respect to Fig. 2 and/or the electronic system discussed below with respect to Fig. 9.

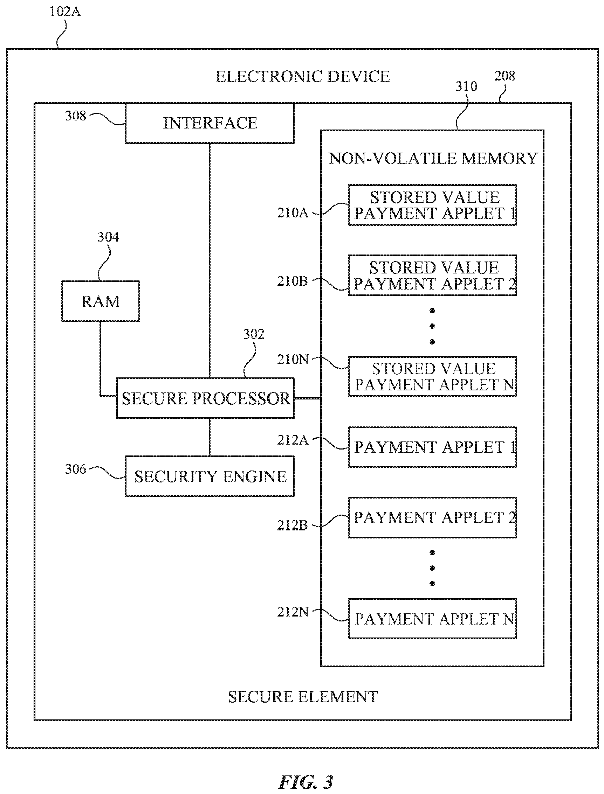

In one or more implementations, one or more of the electronic devices 102A-B may include a secure element onto which one or more payment applets, including stored value payment applets, may be provisioned. An example electronic device that includes a secure element is discussed further below with respect to Fig. 2, and an example secure element is discussed further below with respect to Fig. 3.

In order to have a stored value payment applet for a given service provider provisioned onto a secure element of one or more of the electronic devices 102A-B, such as the electronic device 102A, a user of the electronic device 102A may access a web site or app associated with the service provider, such as a web site provided by the one or more service provider servers 120, and/or the user may interact with a physical device associated with the service provider, such as a stored value card provisioning device, to request that a stored value payment applet for the service provider be provisioned onto the secure element of the electronic device 102A. The user may provide a monetary payment to the service provider, such as a cash payment to a physical machine and/or an electronic payment via the web site or app. The monetary payment may correspond to the monetary value the user would like associated with the stored value payment applet being provisioned on the electronic device 102A.

After completing the transaction with the service provider, the one or more of the service provider servers 120 and/or the one or more mobile payment system servers 110, such as a TSM server and/or a broker server, may cause the stored value payment applet for the service provider to be provisioned on a secure element of the electronic device 102A, such as by transmitting a provisioning script to be executed by the secure element of the electronic device 102A. The secure element may execute the provisioning script and provision the stored value payment applet for the service provider on the secure element with the monetary value paid for by the user.

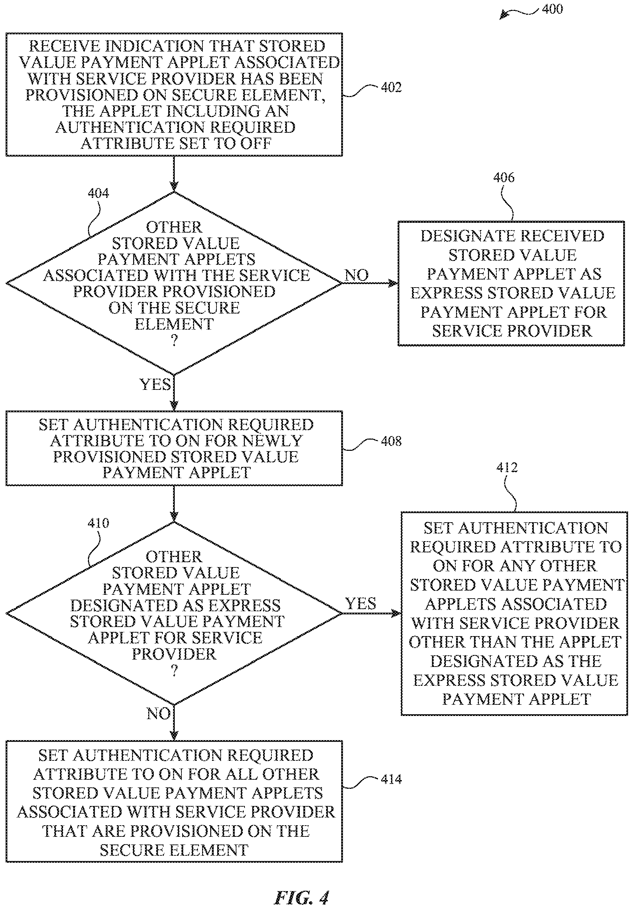

The stored value payment applet may be provisioned on the secure element with an applet identifier (AID) and/or one or more attributes, such as any/all of an attribute indicating whether authentication is required to utilize the stored value payment applet, an attribute indicating whether the authentication required attribute is locally configurable, e.g., without facilitation from a TSM server, and/or an attribute storing the amount of the monetary value associated with the stored value payment applet. The applet identifier may be a unique identifier relative to the other payment applets provisioned on the secure element and the applet identifier may be used to identify the stored value payment applet. In one or more implementations, if the stored value payment applet is the only stored value payment applet currently provisioned on the secure element of the electronic device 102A for the service provider, the stored value payment applet may be automatically designated as the express stored value payment applet for the corresponding service provider. An example process for configuring a newly provisioned stored value payment applet is discussed further below with respect to Fig. 4.

Once an express stored value payment applet has been designated on the secure element of the electronic device 102A for a given service provider and the express stored value payment mode is active on the electronic device 102A, the user may use the electronic device 102A for a wireless transaction, such as a wireless payment transaction with a wireless payment terminal associated with the service provider, such as the wireless payment terminal 104A, without the having to authenticate with, or provide other input to, the electronic device 102A. Thus, when utilizing an NFC-based wireless payment transaction, the user may place their electronic device 102A on, or in close proximity to (e.g., within approximately 4-20 centimeters), the wireless payment terminal 104A to perform a wireless payment transaction with the wireless payment terminal 104A using the express stored value payment applet without authenticating. Thus, the electronic device 102A, configured with the express stored value payment applet, can be used to complete a payment transaction - e.g., a contactless payment - with the wireless payment terminal 104A for a transit fare or other such transaction, without the electronic device 102A first having to receive input, such as authentication input or an unlock command.

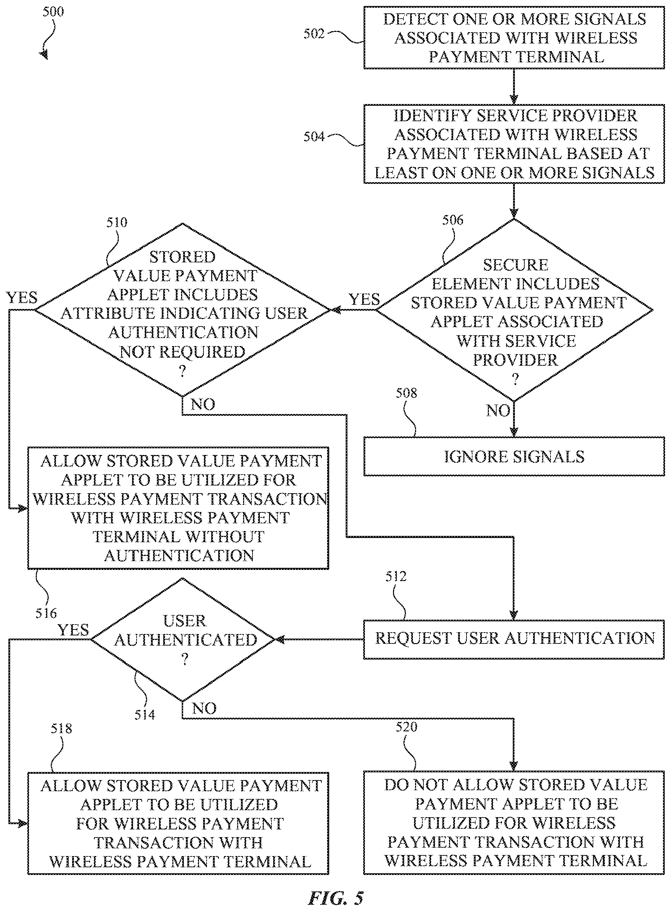

For example, when the electronic device 102A is in close proximity to the wireless payment terminal 104A, the electronic device 102A may detect one or more polling signals transmitted by the wireless payment terminal 104A. The electronic device 102A may use the polling signals to determine that the wireless payment terminal 104A is associated with the service provider corresponding to the express stored value payment applet, and the electronic device 102A may then cause the wireless payment transaction to be performed using the express stored value payment applet. An example process of using an express stored value payment applet in a wireless payment transaction is discussed further below with respect to Fig. 5.

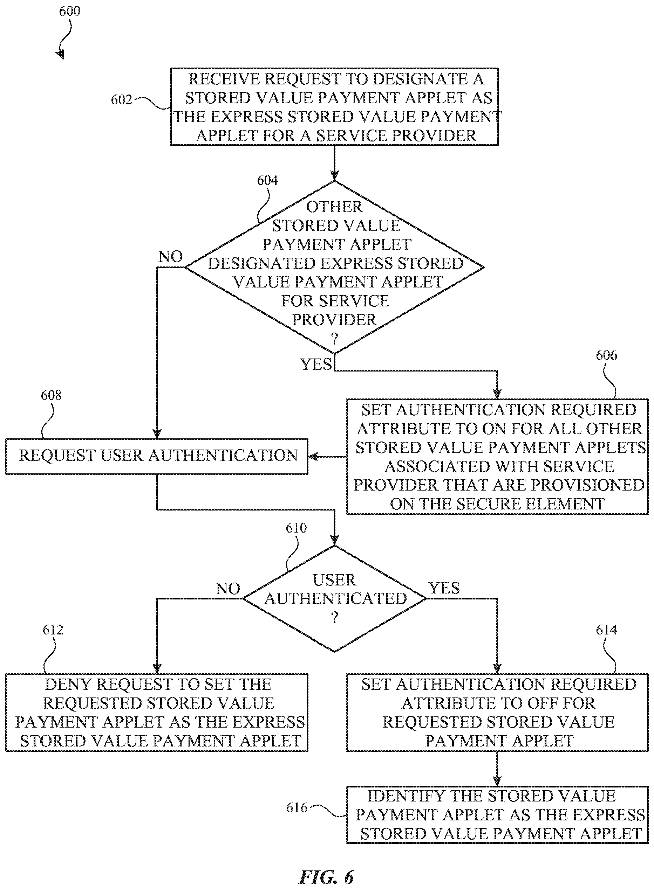

In one or more implementations, only one stored value payment applet per service provider may be designated as the express stored value payment applet on the secure element of the electronic device 102A. However, if there are multiple stored value payment applets provisioned on the secure element of the electronic device 102A for a given service provider, the stored value payment applet designated as the express stored value payment applet for the service provider can be changed automatically and/or through user input. An example process for changing the express stored value payment applet for a given service provider, and/or for initially setting the express stored value payment applet for a given service provider, is discussed further below with respect to Fig. 6.

After a stored value payment applet for a given service provider has been provisioned on a secure element of the electronic device 102A, the user may interact with the web site provided by the one or more service provider servers 120, and/or a card provisioning device associated with the service provider, to add monetary value to the stored value payment applet and/or to add additional services to the stored value payment applet, such as a particular type of commuter pass, a pass for a number of rides or a length of time, etc. After the user has provided payment to the service provider for additional monetary value and/or services, the additional monetary value and/or services can be added to the stored value payment applet provisioned on the secure element, e.g., through a script that is transmitted to the electronic device 102A via the TSM server of the one or more mobile payment system servers 110 and/or of the one or more service provider servers 120. The script may be executed by the secure element of the electronic device 102A, which may cause the additional monetary value and/or other service(s) to be added to the stored value payment applet.

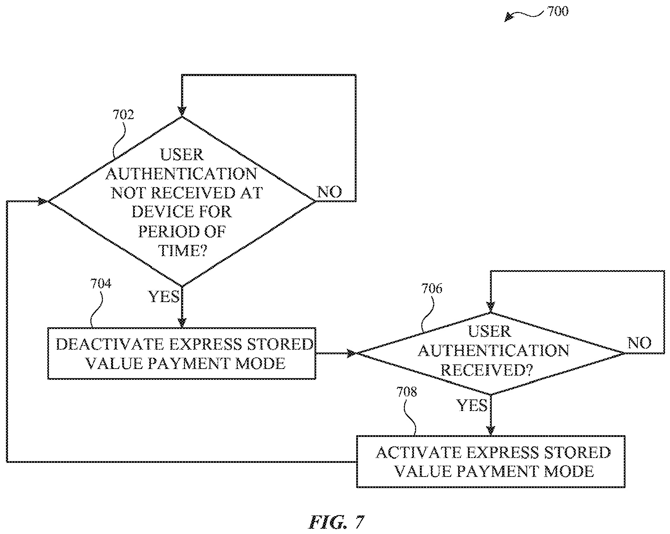

In one or more implementations, the subject system may implement one or more local and/or remote security mechanisms to prevent any express stored value payment applets provisioned on the secure element of the electronic device 102A from being used by an unauthorized user. For example, if the user does not authenticate with the electronic device 102A within a given period of time, such as twenty-four hours, the express stored value payment mode on the electronic device 102A may be deactivated. After the user authenticates with the electronic device 102A, the subject system may re-activate "express" operation of the express stored value payment mode. An example process for locally securing an electronic device 102A implementing the subject express credential transaction system is discussed further below with respect to Fig. 7.

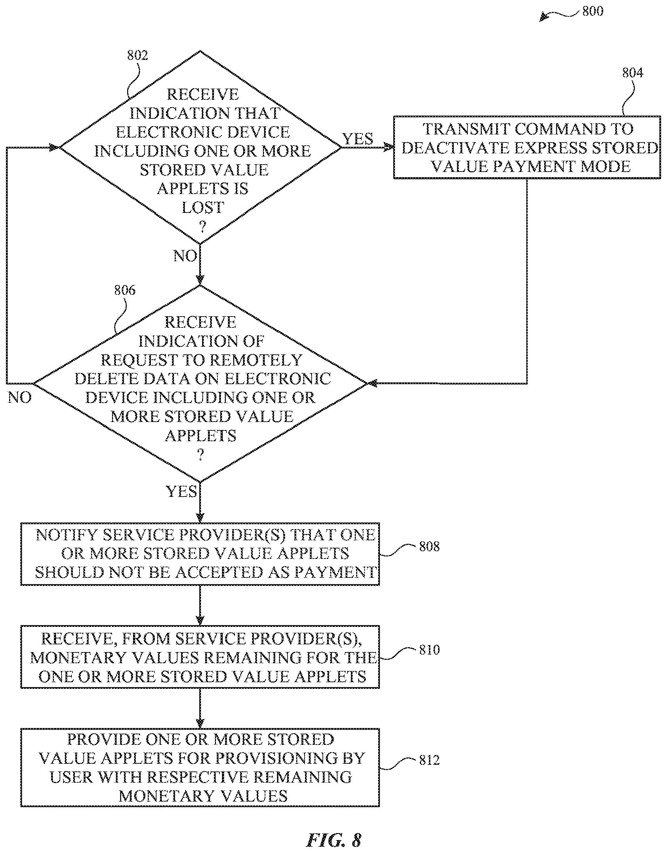

In addition to the aforementioned local security mechanisms, the subject system may also implement one or more remote security mechanisms. For example, if the user indicates that the electronic device 102A has been lost, such as by interacting with a cloud service provided by the one or more mobile payment system servers 110, the one or more mobile payment system servers 110 may attempt to remotely deactivate the express stored value payment mode on the electronic device 102A, e.g., without affecting the authentication attributes of the express stored value payment applets provisioned on the secure element of the electronic device 102A. In one or more implementations, if the user initiates, e.g., via a cloud service provided by the one or more mobile payment system servers 110, a remote wipe of the electronic device 102A, which attempts to remotely delete all of the data on the electronic device 102A, the one or more mobile payment system servers 110 may transmit an indication to the one or more service provider servers 120 to begin a blacklisting process for each of the stored value payment applets provisioned on the secure element of the electronic device 102A that are associated with the service provider (and other service providers will act similarly with respect to provisioned payment applets associated with their respective systems). An example process for remotely securing an electronic device 102A implementing the subject express credential transaction system is discussed further below with respect to Fig. 8.

FIG. 2 illustrates a network environment 200 including an example electronic device 102A that may implement an express credential transaction system in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided. In one or more implementations, one or more components of the example electronic device 102A may be implemented by the electronic device 102B.

The example network environment 200 may include the electronic device 102A, the wireless payment terminal 104A, the network 106, and the one or more mobile payment system servers 110. The one or more mobile payment system servers 110 may include a trusted services manager (TSM) server 222 and a broker server 224. The electronic device 102A may include a host processor 202, a memory 204, an NFC controller 206, and a secure element 208.

The secure element 208 may include one or more interfaces for communicatively coupling (directly or indirectly) to the NFC controller 206 and/or the host processor 202, such as via one or more single wire protocol (SWP) connections and/or any other data connection. The secure element 208 may include one or more provisioned stored value payment applets 210A-N and/or one or more provisioned non-stored value payment applets 212A-N, which may be referred to herein as payment applets 212A-N. In one or more implementations, the operating system and/or execution environment of the secure element 208 may be a JAVA-based operating system and/or JAVA-based execution environment, and the applets 210A-N, 212A-N may be JAVA-based applets. In other implementations, other operating systems, languages, and/or environments can be implemented. In addition to the one or more applets 210A-N, 212A-N, the secure element 208 may also include one or more additional applets for performing other operations, such as a security applet, a registry applet, and the like.

The applets 210A-N, 212A-N may be provisioned on the secure element 208 in part by, for example, the trusted services manager server 222 and/or the broker server 224. For example, the trusted services manager server 222 and/or the broker server 224 may transmit a provisioning script to the electronic device 102A via the network 106. In some implementations, the host processor 202 of the electronic device 102A may receive the script and may provide the script to the secure element 208, such as via the NFC controller 206 and/or directly to the secure element 208. The secure element 208 may perform one or more security mechanisms to verify the received script, such as one or more security mechanisms inherent in the GlobalPlatform framework, and may then execute the received script.

The execution of the script by the secure element 208 may cause one or more of the applets 210A-N, 212A-N to be provisioned on the secure element 208. Each of the applets 210A-N, 212A-N may be provisioned with one or more of: an applet identifier, a device primary account number (DPAN) identifier, an identifier of the associated service provider, and/or one or more attributes. The applet identifier associated with a given payment applet 212A may be used by, for example, the host processor 202 and/or the trusted services manager server 222 to uniquely identify the payment applet 212A relative to the other applets 210A-N, 212B-N provisioned on the secure element 208, such as to perform one or more operations with respect to the payment applet 212A. In one or more implementations, the applet identifiers may be used by the host processor 202 to store associations between the applets 210A-N, 212A-N and the corresponding service providers.

The DPAN identifier may be associated with an account, such as a credit card account, associated with a given payment applet 212A. In one or more implementations, since the stored value payment applets 210A-N locally store a monetary value, the stored value payment applets 210A-N may not be provisioned with a DPAN identifier and may use another identifier instead. When conducting a wireless payment transaction using one of the payment applets 212A-N, the secure element 208 may provide the DPAN identifier to a wireless payment terminal 104A. The wireless payment terminal 104A may then forward the DPAN identifier to the associated service provider who can determine the account associated with the DPAN identifier, and confirm that the account contains sufficient funds and/or credit to complete the wireless payment transaction.

Among others, the one or more attributes provisioned with one or more of the applets 210A-N, 212A-N may include, for example, an authentication required attribute that indicates whether authentication is required to utilize the applet for wireless payment transactions, and an authentication configurable attribute that indicates whether the authentication required attribute is locally configurable, such as via a command from the host processor 202 without involving the trusted services manager server 222. Allowing the authentication required attribute to be locally configurable may allow a user to activate an express credential when the electronic device 102A is offline and therefore the trusted services manager server 222 and/or the broker server 224 are not accessible. One or more of the stored value payment applets 210A-N, such as the stored value payment applet 210A, may also be provisioned with an attribute that indicates the amount of the monetary value that is being locally stored in (or in association with) the stored value payment applet 210A.

The stored value payment applets 210A-N may each initially be provisioned with the authentication required attribute set to "off' or "no" (or "0"), and the authentication configurable attribute set to "yes" or "on" (or "1"), such that one or more of the stored value payment applets 210A-N, such as the stored value payment applet 210A, can be automatically, e.g. without user authentication, designated as an express stored value payment applet for a given service provider when one or more conditions are satisfied. However, when the one or more conditions are not satisfied, the authentication required attributes of the stored value payment applets 210A-N may be changed to "on" or "yes" immediately after provisioning, such that only one of the stored value payment applets 210AN per service provider has the authentication required attribute set to "off' or "no," as is discussed further below with respect to Fig. 4.

The payment applets 212A-N may each be initially provisioned with the authentication required attribute set to "on" or "yes," and the authentication configurable attribute set to "no" or "off." Thus, since the payment applets 212A-N are provisioned with the authentication configurable attribute set to "no" or "off," the authentication required attribute cannot be locally changed, e.g., by an instruction from the host processor 202, without facilitation from the trusted services manager server 222.

In one or more implementations, the applets 210A-N, 212A-N may also be provisioned with an attribute that indicates the type of communication protocol used by the applets 210A-N, 212A-N to communicate with a wireless payment terminal, such as the wireless payment terminal 104A. The types of communication protocols may include, for example, an NFC-A protocol, an NFC-B protocol, an NFC-F protocol, a Bluetooth protocol, a Bluetooth low energy (BLE) protocol, a Zigbee protocol, a Wi-Fi protocol, or generally any communication protocol.

In some implementations, two or more of the stored value payment applets 210AN may correspond to the same service provider, such as the same transit system. Additionally, in some implementations, two or more stored value payment applets 210A-N may be provisioned that correspond to different service providers, such as different transit systems. Similarly, one or more of the payment applets 212A-N may be associated with the same service provider, such as the same financial institution, and/or may be associated with different service providers. In one or more implementations, only one of the stored value payment applets 210A-N associated with a given service provider may be designated as the express stored value payment applet for the service provider. In one or more implementations, such as a host card emulation implementation, all or part of the secure element 208 may be implemented by the host processor 202, and therefore, in one or more implementations, the secure element 208 may not be included in the electronic device 102A. The secure element 208 and the applets 210A-N, 212A-N provisioned thereon are discussed further below with respect to Fig. 3.

The NFC controller 206 may include one or more antennas and one or more transceivers for transmitting/receiving NFC communications. The NFC controller 206 may further include one or more interfaces, such as a single wire protocol interface, for coupling to the host processor 202 and/or the secure element 208. The NFC controller 206 may be able to communicate via one or more different NFC communication protocols, such as NFC-A (or Type A), NFC-B (or Type B), and/or NFC-F (or Type F or FeliCA). The NFC-A protocol may be based on International Organization for Standardization (ISO)/International Electrotechnical Commission (IEC) 14443A and may use Miller bit coding with a 100 percent amplitude modulation. The NFC-B protocol may be based on ISO/IEC 14443B and may use variations of Manchester encoding along with a 10 percent modulation. The NFC-F protocol may be based on FeliCA JIS X6319-4 and may use a slightly different variation of Manchester coding than the NFC-B protocol.

The wireless payment terminal 104A may include similar wireless communication capabilities as the electronic device 102A. For example the wireless payment terminal 104A may include one or more antennas and/or transceivers for communicating with the electronic device 102A via one or more of an NFC-A protocol, an NFC-B protocol, an NFC-F protocol, a Bluetooth protocol, a Bluetooth low energy protocol, a Zigbee protocol, a Wi-Fi protocol, or generally any communication protocol. In one or more implementations, the wireless payment terminal 104A may include a wireless reader, such as an NFC reader.

In one or more implementations, power may be supplied to the NFC controller 206 and the secure element 208 from a current induced by a wireless reader, such as an NFC reader, of the wireless payment terminal 104A. Thus, in one or more implementations, the NFC controller 206 and the secure element 208 may provide the subject system for express stored value payment even when the electronic device 102A is unable to supply power to the NFC controller 206 and/or the secure element 208. In one or more implementations, the NFC controller 206 and the secure element 208 may be coupled to a supplemental power supply, such as a solar power supply and/or a solar charged power supply, that may provide power to the NFC controller 206 and/or the secure element 208 even when the main power supply of the electronic device 102A is low or otherwise unavailable.

In one or more implementations, the wireless payment terminal 104A may transmit one or more polling signals, advertisement signals, discovery signals and/or broadcast signals. The signals may be used, for example, to initiate a wireless payment transaction with the electronic device 102A, to identify the service provider associated with the wireless payment terminal 104A, and/or to determine whether the wireless payment terminal 104A supports express credential transactions. Thus, in one or more implementations, the host processor 202 may be able to identify the service provider associated with the wireless payment terminal 104A, and determine that the wireless payment terminal 104A supports express credential transactions, based at least in part on the polling signals and/or the geolocation of the electronic device 102A. In one or more implementations, one or more of the polling signals may carry information that identifies the service provider associated with the wireless payment terminal 104A.

For example, the polling signals may be associated with a particular pattern, code, and/or signature (e.g., based on frequency of transmission, signal length, preamble length, etc.) that may be associated with a given service provider, such as in a given geographic region, e.g. continent, country, state, city, etc. In one or more implementations, the electronic device 102A may detect the presence or absence of one or more specific NFC technology types (A, B, F) plus the presence (even multiple times by counting) or absence of polling signals and their data content. For example, the electronic device 102A may initiate an express credential transaction when Type F is detected and Type A/B are not detected and polling signal System Code 0003 (for Type F FeliCA systems) is detected at least two times and polling signals FE00 or FFFF are not detected.

For explanatory purposes, the electronic device 102A is illustrated in Fig. 2 as utilizing the NFC controller 206 to communicate with the wireless payment terminal 104A. However, the electronic device 102A may use any wireless communication protocol to communicate with the wireless payment terminal 104A, such as Bluetooth, Bluetooth low energy, Wi-Fi, Zigbee, millimeter wave (mmWave), or generally any wireless communication protocol.

The broker server 224 may communicate with the one or more service provider servers 120, such as for purposes of managing user authentication with the service provider, receiving updates from the service provider to be applied to the secure element 208 of the electronic device 102A, and the like. The trusted services manager server 222 may communicate with the secure element 208 of the electronic device 102A via the network 106 and the host processor 202 to facilitate managing the stored value payment applets 210A-N, 212A-N on the secure element 208. For example, the trusted services manager server 222 may transmit scripts to the secure element 208 for modifying/updating one or more of the applets 210A-N, 212A-N, and/or for provisioning new applets on the secure element 208.

The host processor 202 may include suitable logic, circuitry, and/or code that enable processing data and/or controlling operations of the electronic device 102A. In this regard, the host processor 202 may be enabled to provide control signals to various other components of the electronic device 102A. The host processor 202 may also control transfers of data between various portions of the electronic device 102A. Additionally, the host processor 202 may enable implementation of an operating system or otherwise execute code to manage operations of the electronic device 102A. The memory 204 may include suitable logic, circuitry, and/or code that enable storage of various types of information such as received data, generated data, code, and/or configuration information. The memory 204 may include, for example, random access memory (RAM), read-only memory (ROM), flash, and/or magnetic storage.

In one or more implementations, one or more of the host processor 202, the memory 204, the NFC controller 206, the secure element 208, and/or one or more portions thereof, may be implemented in software (e.g., subroutines and code), hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

FIG. 3 illustrates an example electronic device 102A including an example secure element 208 that may be used in an express credential transaction system in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided. For explanatory purposes, the secure element 208 is illustrated as being implemented in the electronic device 102A; however, the secure element 208 may be implemented in the electronic device 102B and/or any other electronic device.

The secure element 208 may include, among other components, a secure processor 302, RAM 304, a security engine 306, an interface 308, and non-volatile memory 310. The RAM 304 may include one or more of static RAM (SRAM) and/or dynamic RAM (DRAM). The interface 308 may communicatively couple the security element 208 to one or more other chips in the device, such as the NFC controller 206 and/or the host processor 202. The interface 308 may be, for example, a SWP interface, a universal serial bus (USB) interface, or generally any data interface. The secure processor 302 may be, for example, a reduced instruction set computing (RISC) processor, an advanced RISC machine (ARM) processor, or generally any processing circuitry.

The security engine 306 may perform one or more security operations for the secure element 208. For example, the security engine 306 may perform cryptographic operations and/or may manage cryptographic keys and/or certificates. In one or more implementations, the communications between the secure element 208 and an external device, such as the wireless payment terminal 104A and/or the trusted services manager server 222 may be encrypted. For example, for NFC-F communications, an encryption key may be dynamically generated each time mutual authentication is performed. In these one or more implementations, the encryption/decryption and/or key generation/management may be performed all or in part by the security engine 306.

The non-volatile memory 310 may be and/or may include, for example, flash memory. The non-volatile memory 310 may store the attributes and executable code associated with the applets 210A-N, 212A-N. In one or more implementations, the non-volatile memory 310 may also store firmware and/or operating system executable code that is executed by the secure processor 302 to provide the execution environment for the applets 210A-N, 212A-N, such as a JAVA execution environment.

In one or more implementations, one or more of the secure processor 302, the RAM 304, the security engine 306, the interface 308, the non-volatile memory 310, and/or one or more portions thereof, may be implemented in software (e.g., subroutines and code), hardware (e.g., an ASIC, an FPGA, a PLD, a controller, a state machine, gated logic, discrete hardware components, or any other suitable devices) and/or a combination of both.

FIG. 4 illustrates a flow diagram of an example process 400 for configuring a newly provisioned stored value payment applet in an express credential transaction system in accordance with one or more implementations. For explanatory purposes, the process 400 is primarily described herein with reference to the host processor 202 and the secure element 208 of the electronic device 102A of Figs. 1-2. However, the process 400 is not limited to the host processor 202 or the secure element 208 of the electronic device 102A, and one or more blocks (or operations) of the process 400 may be performed by one or more other components of the electronic device 102A and/or without using the host processor 202. The electronic device 102A also is presented as an exemplary device and the operations described herein may be performed by any suitable device. For example, the process 400 may be performed by the electronic device 102B, or generally any electronic device. Further for explanatory purposes, the blocks of the process 400 are described herein as occurring in serial, or linearly. However, multiple blocks of the process 400 may occur in parallel. In addition, the blocks of the process 400 need not be performed in the order shown and/or one or more of the blocks of the process 400 need not be performed and/or can be replaced by other operations.

In the process 400 for configuring a newly provisioned stored value payment applet, the host processor 202 of the electronic device 102A receives an indication that a stored value payment applet associated with a service provider, such as the stored value payment applet 210A, has been provisioned on the secure element 208 of the electronic device 102A (402). For example, the host processor 202 may receive a notification from the secure element 208 and/or the trusted services manager server 222 indicating that the stored value payment applet 210A has been provisioned on the secure element 208. The notification may include the applet identifier for the newly provisioned stored value payment applet 210A. The stored value payment applet 210A may be initially provisioned on the secure element 208 with the authentication required attribute set to "off' or "no," the authentication configurable attribute set to "yes" or "on," and a monetary value attribute that is set to the monetary value previously paid for with respect to the stored value payment applet 210A. Provisioning of the stored value payment applet 210A may occur through multiple separate operations and/or exchanges of data.

The host processor 202 then determines whether any other stored value payment applets 210B-N provisioned on the secure element 208 are associated with the service provider (404). If the host processor 202 determines that there are no other stored value payment applets 210B-N provisioned on the secure element 208 that are associated with the service provider (404), the host processor 202 designates the received stored value payment applet 210A as the express stored value payment applet 210A for the service provider (406). Designating the received stored value payment applet 210A as the express stored value payment applet 210A may include leaving the authentication required attribute for the stored value payment applet 210A set to "off' or "no." Accordingly, express stored value payment applet 210A can be used, e.g., in a transit transaction with the corresponding service provider, without manual input, such as authentication.

In one or more implementations, the host processor 202 may designate the newly provisioned stored value payment applet 210A as the express stored value payment applet for the service provider irrespective of whether any other stored value payment applets 210B-N associated with the service provider are provisioned on the secure element 208, while also setting the authentication required attribute to "yes" or "on" for any other stored value payment applets 210B-N associated with the service provider that are provisioned on the secure element 208.

If the host processor 202 determines that there are one or more other stored value payment applets 210B-N provisioned on the secure element 208 that are associated with the service provider (404), the host processor 202 sets the authentication required attribute to "on" or "yes" for the newly provisioned stored value payment applet 210A (408). Thus, if there are one or more other stored value payment applets 210B-N already provisioned on the secure element 208, the host processor 202 determines that the user has already deactivated at least one express stored value payment applet for the service provider, and therefore the newly provisioned stored value payment applet 210A is not designated as the express stored value payment applet for the service provider. For example, to change the authentication required attribute of the stored value payment applet 210A, the host processor 202 may transmit an instruction, command, and/or script, to the secure element 208 that includes the applet identifier of the newly provisioned stored value payment applet 210A and that indicates that the authentication required attribute for the stored value payment applet 210A should be set to "yes" or "on."

The host processor 202 then determines whether another of the stored value payment applets 210B-N provisioned on the secure element 208 has been designated as the express stored value payment applet for the service provider (410). If the host processor 202 determines that another of the stored value payment applets 210B-N provisioned on the secure element 208, such as the stored value payment applet 210B, has been designated as the express stored value payment applet for the service provider (410), the host processor 202, as a security precaution, sets the authentication required attribute to on for all other stored value payment applets associated with the service provider that are provisioned on the secure element 208 (412). For example, the host processor 202 may transmit a command to the secure element 208 that instructs the secure element 208 to set the authentication required attribute to "on" or "yes" for all of the stored value payment applets 210A,N provisioned on the secure element 208 that are associated with the service provider with the exception of the express stored value payment applet 210B.

If the host processor 202 determines that none of the stored value payment applets 210A-N provisioned on the secure element 208 are currently designated as the express stored value payment applet for the service provider, as a security precaution the host processor 202 sets the authentication required attribute to "yes" or "on" for all of the stored value payment applets 210A-N provisioned on the secure element 208 that are associated with the service provider (414). For example, the host processor 202 may transmit a command to the secure element 208 that instructs the secure element 208 to set the authentication required attribute to "on" or "yes" for all of the stored value payment applets 210A-N provisioned on the secure element 208 that are associated with the service provider.

FIG. 5 illustrates a flow diagram of an example process 500 for using an express stored value payment applet 210A in an express credential transaction system in accordance with one or more implementations. For explanatory purposes, the process 500 is primarily described herein with reference to the host processor 202, the NFC controller 206, and the secure element 208 of the electronic device 102A of Figs. 1-2. However, the process 500 is not limited to the host processor 202, the NFC controller 206, or the secure element 208 of the electronic device 102A, and one or more blocks (or operations) of the process 500 may be performed by one or more other components of the electronic device 102A and/or without using the host processor 202. The electronic device 102A also is presented as an exemplary device and the operations described herein may be performed by any suitable device. For example, the process 500 may be performed by the electronic device 102B, or generally any electronic device. Further for explanatory purposes, the blocks of the process 500 are described herein as occurring in serial, or linearly. However, multiple blocks of the process 500 may occur in parallel. In addition, the blocks of the process 500 need not be performed in the order shown and/or one or more of the blocks of the process 500 need not be performed and/or can be replaced by other operations.

In the process 500 for using an express stored value payment applet 210A, the electronic device 102A, such as via the NFC controller 206, detects one or more signals associated with a wireless payment terminal 104A (502). The one or more signals may include, for example, polling signals, pilot signals, advertising signals, discovery signals, broadcast signals, the signal type, or generally any signals that may be transmitted by the wireless payment terminal 104A. In one or more implementations, the NFC controller 206 provides the one or more signals to the host processor 202 of the electronic device 102A.

The host processor 202 identifies, based at least in part on the one or more signals, the service provider that is associated with the wireless payment terminal 104A (504). As discussed further above, the host processor 202 may identify the service provider associated with the wireless payment terminal 104A based at least in part on information determinable and/or derivable from the one or more signals. Further, in some implementations, information regarding the electronic device 102A that is determinable by the host processor 202, such as a location of the electronic device 102A, also can be used to identify the service provider associated with the wireless payment terminal 104A. The host processor 202 determines whether any stored value payment applets 210A-N associated with the identified service provider are provisioned on the secure element 208 (506). For example, the host processor 202 may query the secure element 208 to determine whether any stored value payment applets 210A-N have been provisioned for use with the service provider.

If the host processor 202 determines that none of the stored value payment applets 210A-N provisioned on the secure element 208 are associated with the service provider (506), the host processor 202 ignores the one or more signals, such as by not responding to the one or more signals (508). If the host processor 202 determines that a stored value payment applet 210A associated with the service provider has been provisioned on the secure element 208 (506), the host processor 202 determines whether the stored value payment applet 210A includes an attribute indicating that user authentication is not required to utilize the stored value payment applet 210A (510). For example, the host processor 202 may determine whether the authentication attribute for the stored value payment applet 210A is set to "no" or "off," such as by querying the secure element 208 with the applet identifier associated with the stored value payment applet 210A.

If the host processor 202 determines that the stored value payment applet 210A includes the attribute indicating that user authentication is not required to utilize the stored value payment applet 210A (510), the host processor 202 allows the stored value payment applet 210A to be utilized, such as by the NFC controller 206, for the wireless payment transaction with the wireless payment terminal 104A without requesting the user authentication (516). The NFC controller 206 may then utilize the stored value payment applet 210A to conduct the wireless payment transaction with the wireless payment terminal 104A. Thus, the host processor 202 automatically allows the stored value payment applet 210A to be utilized by the NFC controller 206 responsive to detecting polling signals from the wireless payment terminal 104A that trigger the express credential transaction, as well as verifying that the stored value payment applet 210A includes the attribute indicating that user authentication is not required to utilize the stored value payment applet 210A.

For example, after securing a connection with the wireless payment terminal 104A, such as by establishing one or more encryption keys, the wireless payment terminal 104A may transmit, to the NFC controller 206, a monetary amount to be deducted from the monetary value associated with the stored value payment applet 210A. The NFC controller 206, alone and/or in conjunction with the host processor 202, may instruct the secure element 208 to deduct the indicated amount. The secure element 208 may respond with an indication of whether the amount was successfully deducted, and the NFC controller 206 forwards the same to the wireless payment terminal 104A. If the indicated amount was successfully deducted, the wireless payment terminal 104A may allow the user of the electronic device 102A to access the service, such as access transit provided by a train, bus, boat, etc.

In one or more implementations, the host processor 202 may not take any active steps to allow the stored value payment applet 210A to be utilized by the NFC controller 206 to conduct the wireless payment transaction with the wireless payment terminal 104A. Instead, the NFC controller 206 may be allowed to utilize the stored value payment applet 210A, without facilitation of the host processor 202, when the authentication required attribute for the stored value payment applet 210A is set to "no" or "off." However, if host processor 202 and/or the NFC controller 206 determines that the stored value payment applet 210A does not include the attribute indicating that the user is not required to authenticate, e.g., the authentication required attribute is set to "yes" or "on," (510), the host processor 202 requests user authentication prior to allowing the stored value payment applet 210A to be utilized (512). The user authentication may include, for example, biometric authentication, such as fingerprint authentication, iris authentication, voice authentication, etc., password authentication, manual user input, or generally any user authentication.

When the polling signals from the wireless payment terminal 104A that trigger the express credential transaction are not detected and/or there are no corresponding stored value payment applets that include the attribute indicating that user authentication is not required, the host processor 202 may determine whether a default stored value payment applet has been configured for the service provider corresponding to the wireless payment terminal 104A. For example, the user may set an express stored value payment applet for the service provider that may be used without authentication (when the corresponding wireless payment terminal 104A supports express credential transactions), and/or the user may set a default stored value payment applet for the service provider that may be used with authentication, such as when the wireless payment terminal 104A does not support express credential transactions. In one or more implementations, the express stored value payment applet may also be set as the default stored value payment applet.

If the host processor 202 determines that the user has successfully authenticated (514), e.g., within a time limit, the host processor 202 allows the stored value payment applet 210A to be utilized, such as by the NFC controller 206, for the wireless payment transaction with the wireless payment terminal 104A (518). If the host processor 202 determines that the user has not successfully authenticated (514), the host processor 202 does not allow the stored value payment applet 210A to be utilized for the wireless payment transaction with the wireless payment terminal 104A (520).

FIG. 6 illustrates a flow diagram of an example process 600 for designating an express stored value payment applet 210A for a service provider in an express credential transaction system in accordance with one or more implementations. For explanatory purposes, the process 600 is primarily described herein with reference to the host processor 202 and the secure element 208 of the electronic device 102A of Figs. 1-2. However, the process 600 is not limited to the host processor 202 or the secure element 208 of the electronic device 102A, and one or more blocks (or operations) of the process 600 may be performed by one or more other components of the electronic device 102A and/or without using the host processor 202. The electronic device 102A also is presented as an exemplary device and the operations described herein may be performed by any suitable device. For example, the process 600 may be performed by the electronic device 102B, or generally any electronic device. Further for explanatory purposes, the blocks of the process 600 are described herein as occurring in serial, or linearly. However, multiple blocks of the process 600 may occur in parallel. In addition, the blocks of the process 600 need not be performed in the order shown and/or one or more of the blocks of the process 600 need not be performed and/or can be replaced by other operations.

In the process 600 for designating an express stored value payment applet 210A for a service provider, the host processor 202 receives a request to designate a stored value payment applet 210A as the express stored value payment applet for a service provider (602). For example, the host processor 202 may provide to the user, on a display, a user interface for selecting/deselecting and/or changing an express stored value payment applet for one or more service providers. The user interface may display a graphical representation of the stored value payment applets 210A-N, e.g., associated with a given service provider or otherwise designating a corresponding service provider, that are provisioned on the secure element 208. The user may select one of the graphical representations to request that the corresponding stored value payment applet 210A be set as the express stored value payment applet, e.g., for use in transactions with the associated service provider.

Upon receiving the request (602), the host processor 202 determines whether another stored value payment applet 210B is already designated as the express stored value payment applet for the service provider (604). For example, the host processor 202 may query the secure element 208 to determine whether an express stored value payment applet is already designated as "express" for the service provider. In one or more implementations, the host processor 202 may access data stored in the memory 204, such as data associated with generating the user interface, to determine whether an express stored value payment applet is already designated for the service provider without querying the secure element 208.

For example, if an express stored value payment applet is already designated for the service provider, the graphical representation of the express stored value payment applets 210A-N associated with the service provider may include a graphical indication that the stored value payment applet 210B is designated as the express stored value payment applet for the service provider. The graphical attribute may include, for example, shading, highlighting, color changes, outlines, etc. Thus, host processor 202 may determine, based on the information used to generate the user interface and without querying the secure element 208, whether another stored value payment applet 210B is already designated as the express stored value payment applet 210B for the service provider (604).

If the host processor 202 determines that the stored value payment applet 210A is already designated as the express stored value payment applet for the service provider (604), as a security precaution the host processor 202 sets the authentication required attribute to "yes" or "on" for all of the stored value payment applets 210A-N provisioned on the secure element 208 that are associated with the service provider (606). For example, the host processor 202 may transmit a command to the secure element 208 instructing the secure element 208 to set the authentication required attribute to "yes" or "on" for all of the stored value payment applets 210A-N provisioned on the secure element 208 (606).

Regardless of whether the host processor 202 determines that the stored value payment applet 210B is already designated as the express stored value payment applet for the service provider (604), since the requested stored value payment applet 210A currently has an authentication required attribute set to "yes" or "on", the host processor 202 requests authentication from the user to initiate the change (608). If the user is not authenticated (610), the host processor 202 denies the request to set the stored value payment applet 210A as the express stored value payment applet (612). Thus, in one or more implementations, if the user authentication fails (610), none of the stored value payment applets 210A-N associated with the service provider may be designated as the express stored value payment applet for the service provider.

If the user is authenticated (610), the host processor 202 sets the authentication required attribute to "off' or "no" for the requested stored value payment applet 210A (614). For example, the host processor 202 may transmit a command to the secure element 208 indicating that the authentication required attribute should be set to "off' or "no" for the requested stored value payment applet 210A (614). The host processor 202 then can identify the stored value payment applet 210A as the express stored value payment applet for the service provider (616), such as by providing a graphical indication indicating the same on the user interface displayed to the user.

FIG. 7 illustrates a flow diagram of an example process 700 for locally securing an electronic device 102A implementing an express credential transaction system in accordance with one or more implementations. For explanatory purposes, the process 700 is primarily described herein with reference to the host processor 202 and the secure element 208 of the electronic device 102A of Figs. 1-2. However, the process 700 is not limited to the host processor 202 or the secure element 208 of the electronic device 102A, and one or more blocks (or operations) of the process 700 may be performed by one or more other components of the electronic device 102A and/or without using the host processor 202. The electronic device 102A also is presented as an exemplary device and the operations described herein may be performed by any suitable device. For example, the process 700 may be performed by the electronic device 102B, or generally any electronic device. Further for explanatory purposes, the blocks of the process 700 are described herein as occurring in serial, or linearly. However, multiple blocks of the process 700 may occur in parallel. In addition, the blocks of the process 700 need not be performed in the order shown and/or one or more of the blocks of the process 700 need not be performed and/or can be replaced by other operations.

In the process 700 for locally securing the electronic device 102A, the host processor 202 determines whether user authentication has not been received at the electronic device 102A for a given period of time, such as twenty-four hours (702). If the host processor 202 determines that the user authentication has not been received at the electronic device 102A for the given period of time (702), the host processor 202 deactivates the express stored value payment mode on the electronic device 102A (704). The express stored value payment mode may be associated with a setting that is configurable by, for example, the host processor 202. When the express stored value payment mode is deactivated on the electronic device 102A, the host processor 202 prevents the NFC controller 206 from using any of the stored value payment applets 210A-N in a wireless transaction without user authentication. However, deactivating the express stored value payment mode does not affect the authentication required attributes of the stored value payment applets 210A-N, such that the authentication required attributes are maintained when the express stored value payment mode is reactivated.

The host processor 202 waits until the user authentication is received (706), and when valid user authentication is received (706), the host processor 202 reactivates the express stored value payment mode on the electronic device 102A (708). Once the express stored value payment mode is activated, the NFC controller 206 is allowed to utilize any of the stored value payment applets 210A-N that have the authentication required attribute set to "no" or "off' without user authentication, e.g., for an "express" transaction.

In one or more implementations, the host processor 202 and/or the secure element 208 may implement additional security measures when one or more of the stored value payment applets 210A-N, such as the stored value payment applet 210A, has been designated as express stored value payment applet for a given service provider. For example, the host processor 202 and/or the secure element 208 may limit the number of times the express stored value payment applet 210A can be used within a given time period, such as five minutes, without user authentication. The host processor 202 and/or the secure element 208 may impose other security restrictions, e.g., based on location or amount, that may prevent unauthorized use of the express stored value payment applets.

FIG. 8 illustrates a flow diagram of an example process 800 for remotely securing an electronic device 102A implementing an express credential transaction system in accordance with one or more implementations. For explanatory purposes, the process 800 is primarily described herein with reference to the electronic device 102A of Figs. 1-2, and the one or more mobile payment system servers 110. However, the process 800 is not limited to the electronic device 102A or the one or more mobile payment system servers 110, and one or more blocks (or operations) of the process 800 may be performed by one or more components of the electronic device 102A or the one or more mobile payment system servers 110. The electronic device 102A also is presented as an exemplary device and the operations described herein may be performed by any suitable device. For example, the process 800 may be performed by the electronic device 102B and/or the one or more service provider servers 120, or generally any electronic device and/or server. Further for explanatory purposes, the blocks of the process 800 are described herein as occurring in serial, or linearly. However, multiple blocks of the process 800 may occur in parallel. In addition, the blocks of the process 800 need not be performed in the order shown and/or one or more of the blocks of the process 800 need not be performed and/or can be replaced by other operations.

In the process 800 for remotely securing an electronic device 102A, the one or more mobile payment system servers 110 may receive an indication that the electronic device 102A has been lost, where the electronic device 102A includes the secure element 208 having one or more stored value payment applets 210A-N provisioned thereon (802). For example, a user may interact with a website or application, e.g., associated with the one or more mobile payment system servers 110, to indicate that the electronic device has been lost. Since the stored value payment applets 210A-N locally store a representation of actual monetary value, if the electronic device 102A is lost, then the represented monetary value can be lost as well.

Upon receiving the indication that the electronic device 102A has been lost (802), the one or more mobile payment system servers 110 attempt to transmit a command to the electronic device 102A that causes the host processor 202 of the electronic device 102A to deactivate the express stored value payment mode (804), e.g., without affecting the authentication attributes of the stored value payment applets 210A-N. In one or more implementations, if the one or more mobile payment system servers 110 later receive an indication that the electronic device 102A has been found, the one or more mobile payment system servers 110 may transmit a command to the electronic device 102A that causes the host processor 202 of the electronic device 102A to reactivate the express stored value payment mode. For example, the express mode can be reactivated after local and/or cloud-based authentication has been performed.

The one or more mobile payment system servers 110 may also receive an indication of a request, e.g., from a user, to remotely delete all data on the electronic device 102A that includes the one or more stored value payment applets 210A-N provisioned on the secure element 208 (806). Upon receiving the indication of the request to delete all data from the electronic device 102A (806), the one or more mobile payment system servers 110 may notify the one or more service providers associated with the one or more stored value payment applets 210A-N that were provisioned on the secure element 208 of the electronic device 102A that the one or more stored value applets 210A-N should no longer be accepted in wireless payment transactions (808). For example, the one or more mobile payment system servers 110 may transmit, to the one or more service provider servers 120, a list of identifiers, such as serial numbers or other such unique credential identifiers, of the one or more stored value applets 210A-N.

The one or more service provider servers 120 may add the identifiers of the one or more stored value applets 210A-N to a blacklist that may be periodically distributed to the wireless transaction terminals 104A-B. The wireless transaction terminals 104A-B may not accept wireless payment transactions utilizing a stored value applet that has an identifier listed on the blacklist. Once the one or more service provider servers 120 have propagated the identifiers to the wireless payment terminals 104A-B, the one or more service provider servers 120 determine the recoverable and/or unused monetary value remaining for each of the one or more stored value payment applets 210A-N.

The one or more mobile payment system servers 110 then receive, from the one or more service provider servers 120, an indication of the amount of monetary value remaining for each of the one or more stored value payment applets 210A-N (810). The one or more mobile payment system servers 110 may then make the one or more stored value payment applets 210A-N available to be re-provisioned with the remaining monetary values on another electronic device of the user (812). The user may interact with the one or more mobile payment system servers 110, such as via a web site or application, to re-provision the one or more stored value payment applets 210A-N on another electronic device, such as in the manner described above with respect to Fig. 4.

FIG. 9 illustrates an electronic system 900 with which one or more implementations of the subject technology may be implemented. The electronic system 900 can be, and/or can be a part of, one or more of the electronic devices 102A-B, one or more of the wireless payment terminals 104A-B, and/or one or more of the servers 110, 120 shown in Fig. 1. The electronic system 900 may include various types of computer readable media and interfaces for various other types of computer readable media. The electronic system 900 includes a bus 908, one or more processing unit(s) 912, a system memory 904 (and/or buffer), a ROM 910, a permanent storage device 902, an input device interface 914, an output device interface 906, and one or more network interfaces 916, or subsets and variations thereof.

The bus 908 collectively represents all system, peripheral, and chipset buses that communicatively connect the numerous internal devices of the electronic system 900. In one or more implementations, the bus 908 communicatively connects the one or more processing unit(s) 912 with the ROM 910, the system memory 904, and the permanent storage device 902. From these various memory units, the one or more processing unit(s) 912 retrieves instructions to execute and data to process in order to execute the processes of the subject disclosure. The one or more processing unit(s) 912 can be a single processor or a multi-core processor in different implementations.

The ROM 910 stores static data and instructions that are needed by the one or more processing unit(s) 912 and other modules of the electronic system 900. The permanent storage device 902, on the other hand, may be a read-and-write memory device. The permanent storage device 902 may be a non-volatile memory unit that stores instructions and data even when the electronic system 900 is off. In one or more implementations, a mass-storage device (such as a magnetic or optical disk and its corresponding disk drive) may be used as the permanent storage device 902.

In one or more implementations, a removable storage device (such as a floppy disk, flash drive, and its corresponding disk drive) may be used as the permanent storage device 902. Like the permanent storage device 902, the system memory 904 may be a read-and-write memory device. However, unlike the permanent storage device 902, the system memory 904 may be a volatile read-and-write memory, such as random access memory. The system memory 904 may store any of the instructions and data that one or more processing unit(s) 912 may need at runtime. In one or more implementations, the processes of the subject disclosure are stored in the system memory 904, the permanent storage device 902, and/or the ROM 910. From these various memory units, the one or more processing unit(s) 912 retrieves instructions to execute and data to process in order to execute the processes of one or more implementations.

The bus 908 also connects to the input and output device interfaces 914 and 906. The input device interface 914 enables a user to communicate information and select commands to the electronic system 900. Input devices that may be used with the input device interface 914 may include, for example, alphanumeric keyboards and pointing devices (also called "cursor control devices"). The output device interface 906 may enable, for example, the display of images generated by electronic system 900. Output devices that may be used with the output device interface 906 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in Fig. 9, the bus 908 also couples the electronic system 900 to one or more networks and/or to one or more network nodes, such as the electronic devices 102A-F shown in Fig. 1, through the one or more network interface(s) 916. In this manner, the electronic system 900 can be a part of a network of computers (such as a LAN, a wide area network ("WAN"), or an Intranet, or a network of networks, such as the Internet. Any or all components of the electronic system 900 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of' preceding a series of items, with the term "and" or "or" to separate any of the items, modifies the list as a whole, rather than each member of the list (i.e., each item). The phrase "at least one of' does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other embodiments. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112, sixth paragraph, unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

Before going on to set out the claims however, we first provide the following list of clauses, which point out some features of some embodiments of the invention:
1. A device comprising:
   at least one processor configured to:
   receive an indication that a payment applet associated with a service provider has been provisioned on a secure element of the device, the payment applet including a first attribute indicating whether the payment applet can be utilized, without user authentication, for a wireless transaction associated with the service provider;
   set the first attribute of the payment applet to indicate that the user authentication is required to utilize the payment applet in the wireless transaction associated with the service provider when an other payment applet associated with the service provider is provisioned on the secure element of the device with an other first attribute that indicates that the other payment applet can be utilized for the wireless transaction associated with the service provider without the user authentication, otherwise leaving the first attribute of the payment applet unchanged; and
   control whether the user authentication is requested when utilizing the payment applet or the other payment applet, respectively, for the wireless transaction associated with the service provider based at least in part on the first attribute and the other first attribute, respectively.
2. The device of clause 1, wherein the at least one processor is further configured to:
   set a first attribute of each respective additional payment applet associated with the service provider that is provisioned on the secure element of the device to indicate that the user authentication is required to perform the wireless transaction utilizing each respective additional payment applet when the other first attribute of the other payment applet indicates that the other payment applet can be utilized for the wireless transaction associated with the service provider without the user authentication.
3. The device of clause 1, wherein the service provider comprises a transit provider.
4. The device of clause 1, the payment applet is associated with a stored monetary value, and a result of the wireless transaction is a reduction of the stored monetary value associated with the payment applet.
5. The device of clause 1, wherein the payment applet further comprises a second attribute that indicates that the first attribute can be locally configured by the device without interacting with a server, and an additional payment applet associated with an other service provider is provisioned on the secure element of the device, the additional payment applet comprising an additional first attribute that indicates that the additional payment applet cannot be utilized for another wireless transaction associated with the other service provider without the user authentication and an additional second attribute that indicates that the additional first attribute is not locally configurable by the device without contacting the server.
6. The device of clause 1, wherein the first attribute of the payment applet indicates that the payment applet can be utilized for the wireless transaction associated with the service provider without user authentication and an additional payment applet associated with an additional service provider is provisioned on the secure element of the device, the additional payment applet comprising an additional first attribute that indicates that the additional payment applet can be utilized for an additional wireless transaction with the additional service provider without the user authentication.
7. The device of clause 6, wherein the at least one processor is further configured to:
   detect one or more signals from a wireless payment terminal;
   determine based at least in part on the one or more signals, whether the wireless payment terminal is associated with the service provider or the additional service provider;
   allow the wireless transaction to be performed with the wireless payment terminal utilizing the payment applet without the user authentication when the wireless payment terminal is associated with the service provider; and
   allow the additional wireless transaction to be performed with the wireless payment terminal utilizing the additional payment applet without the user authentication when the wireless payment terminal is associated with the additional service provider.
8. The device of clause 7, wherein the at least one processor is further configured to:
   when the user authentication is not received for a period of time:
   request the user authentication prior to allowing the wireless transaction to be performed with the wireless payment terminal utilizing the payment applet irrespective of whether the first attribute of the payment applet is set to indicate that the payment applet can be utilized for the wireless transaction associated with the service provider without the user authentication.
9. The device of clause 7, wherein the one or more signals comprise near field communication signals.
10. The device of clause 1, wherein the at least one processor is configured to:
   set the first attribute of the payment applet to indicate that the user authentication is required to utilize the payment applet in the wireless transaction without contacting a server.
11. The device of clause 1, wherein the first attribute of the payment applet indicates that the payment applet can be utilized for the wireless transaction associated with the service provider without the user authentication and the at least one processor is further configured to:
   receive a request to allow the other payment applet to be utilized for the wireless transaction associated with the service provider without the user authentication;
   set the first attribute of the payment applet to indicate that the payment applet cannot be utilized for the wireless transaction associated with the service provider without the user authentication;
   request the user authentication; and
   upon receiving the user authentication, set the other first attribute of the other payment applet to indicate that the other payment applet can be utilized for the wireless transaction associated with the service provider without the user authentication.
12. A method, comprising:
   detecting, by a device, one or more signals associated with a wireless payment terminal;
   identifying a service provider associated with the wireless payment terminal based at least in part on the one or more signals;
   determining whether a payment applet associated with the service provider is provisioned on a secure element of the device, the payment applet including an attribute indicating that the payment applet can be utilized for a wireless transaction associated with the service provider without user authentication; and
   allowing the payment applet to be utilized for the wireless transaction with the wireless payment terminal associated with the service provider without the user authentication when the payment applet comprises the attribute that indicates that the payment applet can be utilized for the wireless transaction associated with the service provider without the user authentication, otherwise requesting the user authentication prior to allowing the payment applet to be utilized for the wireless transaction with the wireless payment terminal associated with the service provider.
13. The method of clause 12, wherein identifying the service provider associated with the wireless payment terminal based at least in part on the one or more signals further comprises:
   identifying the service provider associated with the wireless payment terminal based at least in part on the one or more signals and a determined location of the device.
14. The method of clause 12, wherein the identifying the service provider associated with the wireless payment terminal based at least in part on the one or more signals further comprises:
   identifying the service provider associated with the wireless payment terminal based at least in part on at least one of: information carried by the one or more signals, a pattern associated with the one or more signals, or a length of at least one of the one or more signals.
15. The method of clause 12, wherein the secure element comprises an other payment applet including an other attribute indicating that the other payment applet cannot be utilized for the wireless transaction associated with the service provider without the user authentication, and the method further comprises:
   upon identifying the service provider that is associated with the wireless payment terminal, selecting, for the wireless transaction with the wireless payment terminal associated with the service provider, the payment applet including the attribute indicating that the payment applet can be utilized for the wireless transaction associated with the service provider without the user authentication.
16. A system comprising:
   a wireless communication controller configured to detect one or more signals transmitted by a wireless payment terminal and participate in a wireless transaction with the wireless payment terminal;
   a secure element configured to store a plurality of payment applets, each of the plurality of payment applets being associated with one of a plurality of service providers, a first payment applet of the plurality of payment applets comprising an attribute indicating whether the first payment applet can be utilized without user authentication, wherein the first payment applet is associated with a first service provider of the plurality of service providers;
   a processor configured to:
      receive, from the wireless communication controller, the one or more signals transmitted by the wireless payment terminal;
      determine, based at least in part on the one or more signals, that the wireless payment terminal is associated with the first service provider; and
      allow the wireless communication controller to participate in the wireless transaction with the wireless payment terminal using the first payment applet without the user authentication when the attribute of the first payment applet indicates that the first payment applet can be utilized without the user authentication, otherwise request the user authentication prior to allowing the wireless communication controller to engage in the wireless transaction with the wireless payment terminal using the first payment applet.
17. The system of clause 16, wherein the wireless communication controller comprises a near field communication controller.
18. The system of clause 16, wherein the secure element is implemented by the processor.
19. The system of clause 16, wherein the processor is further configured to:
   change the attribute of the first payment applet without facilitation from a server.
20. The system of clause 16, wherein the processor is further configured to:
   receive a request to allow the wireless communication controller to participate in the wireless transaction with the wireless payment terminal using a second payment applet without the user authentication;
   set the attribute of the first payment applet to indicate that the first payment applet cannot be utilized without the user authentication; and
   set an attribute of the second payment applet to indicate that the second payment applet can be utilized without the user authentication.

## Claims

1. A method, comprising:
detecting, by a device, one or more signals associated with a wireless payment terminal;
identifying a service provider associated with the wireless payment terminal based at least in part on the one or more signals;
determining that a payment applet associated with the service provider is provisioned on a secure element of the device, the payment applet including an attribute indicating whether the payment applet can be utilized for a wireless transaction associated with the service provider without user authentication; and
allowing the payment applet to be utilized for the wireless transaction with the wireless payment terminal associated with the service provider without the user authentication when the attribute indicates that the payment applet can be utilized for the wireless transaction associated with the service provider without the user authentication, otherwise requesting the user authentication prior to allowing the payment applet to be utilized for the wireless transaction with the wireless payment terminal associated with the service provider.

2. The method of claim 1, wherein the one or more signals associated with the wireless payment terminal are polling signals transmitted by the wireless payment terminal.

3. The method of claim 1, wherein identifying the service provider associated with the wireless payment terminal based at least in part on the one or more signals further comprises:
identifying the service provider associated with the wireless payment terminal based at least in part on the one or more signals and a determined location of the device.

4. The method of claim 1, wherein the identifying the service provider associated with the wireless payment terminal based at least in part on the one or more signals further comprises:
identifying the service provider associated with the wireless payment terminal based at least in part on at least one of: information carried by the one or more signals, a pattern associated with the one or more signals, or a length of at least one of the one or more signals.

5. The method of claim 1, wherein the secure element comprises an other payment applet including an other attribute indicating that the other payment applet cannot be utilized for the wireless transaction associated with the service provider without the user authentication, and the method further comprises:
upon identifying the service provider that is associated with the wireless payment terminal, selecting, for the wireless transaction with the wireless payment terminal associated with the service provider, the payment applet including the attribute indicating that the payment applet can be utilized for the wireless transaction associated with the service provider without the user authentication.

6. The method of claim any preceding claim, wherein the payment applet includes one or more of: an applet identifier for identifying the payment applet; a further attribute storing an amount of monetary value associated with the payment applet; a device primary account number, DPAN, identifier; and an identifier of the associated service provider.

7. The method of claim 6, wherein the applet identifier is used to store an association between the payment applet and the service provider, and determining that a payment applet associated with the service provider is provisioned on the secure element of the device comprises querying the secure element to determine whether any stored value payment applets have been provisioned for use with the service provider.

8. The method of claim 6 or claim 7, further comprising querying the secure element with the applet identifier associated with the payment applet to determine that the payment applet includes an attribute indicating whether the payment applet can be utilized for the wireless transaction associated with the service provider without user authentication.

9. A system comprising:
a wireless communication controller configured to detect one or more signals transmitted by a wireless payment terminal and participate in a wireless transaction with the wireless payment terminal;
a secure element configured to store a plurality of payment applets, each of the plurality of payment applets being associated with one of a plurality of service providers, a first payment applet of the plurality of payment applets comprising an attribute indicating whether the first payment applet can be utilized without user authentication, wherein the first payment applet is associated with a first service provider of the plurality of service providers;
a processor configured to:
receive, from the wireless communication controller, the one or more signals transmitted by the wireless payment terminal;
determine, based at least in part on the one or more signals, that the wireless payment terminal is associated with the first service provider; and
allow the wireless communication controller to participate in the wireless transaction with the wireless payment terminal using the first payment applet without the user authentication when the attribute of the first payment applet indicates that the first payment applet can be utilized without the user authentication, otherwise request the user authentication prior to allowing the wireless communication controller to engage in the wireless transaction with the wireless payment terminal using the first payment applet.

10. The system of claim 9, wherein the one or more signals transmitted by the wireless payment terminal are polling signals transmitted by the wireless payment terminal.

11. The system of claim 9, wherein the wireless communication controller comprises a near field communication controller.

12. The system of claim 9, wherein the secure element is implemented by the processor.

13. The system of claim 9, wherein the processor is further configured to:
change the attribute of the first payment applet without facilitation from a server.

14. The system of claim 9, wherein the processor is further configured to:
receive a request to allow the wireless communication controller to participate in the wireless transaction with the wireless payment terminal using a second payment applet without the user authentication;
set the attribute of the first payment applet to indicate that the first payment applet cannot be utilized without the user authentication; and
set an attribute of the second payment applet to indicate that the second payment applet can be utilized without the user authentication.
